# EUROPEAN PATENT APPLICATION

(11) **EP 3 882 005 A1**
(43) Date of publication of application: **22.09.2021**
(21) Application number: 21161568.7
(22) Date of filing: 09.03.2021
(51) Int. Cl.: B29C 64/118, B29C 64/314, B29C 64/393, B33Y 10/00, B33Y 50/02, B33Y 70/00, B22F 10/00, B22F 12/00

(54) **ENCODABLE MATERIAL FOR ADDITIVE MATERIAL EXTRUSION**

(30) Priority: 09.03.2020 US 202016813125
(71) Applicant: Hamilton Sundstrand Corporation, Charlotte, NC 28217-4578 (US)
(72) Inventor: BRANDENBURG, Loren O., Stafford Springs, CT 06076 (US); MUTCH, James A., Canton, CT 06019 (US); BROWN, Ricardo O., West Hartford, CT 06117 (US)
(74) Representative: Dehns

(57) **Abstract**

A stock material for additive manufacturing includes an extrudable filament (104) configured for use as feed-stock for a material extrusion type additive manufacturing machine. Machine code (106) is physically affixed to the extrudable filament. The machine code includes code specifying build instructions readable by the extrusion type additive manufacturing machine for building a specific part.

## Description

### BACKGROUND

### 1. Field

The present disclosure relates to additive manufacturing, and more particularly to material extrusion type additive manufacturing.

### 2. Description of Related Art

Material extrusion additive manufacturing systems traditionally feed an extruded material through an extruder, which deposits the material first onto a build plate or support structure, and then layer by layer builds a part upward from the preceding layers. A common practice is for a design firm to design a part, supply the three-dimensional build data to a vendor, and for the vendor to enter the three-dimensional build data into the controller of an additive manufacturing machine to produce the part. The designing firm can lose control of their design, e.g., where the vendor makes unauthorized copies of the designed part, and/or does not observe the design firm's quality requirements.

The conventional techniques have been considered satisfactory for their intended purposes. However, there is an ever present need for improved systems and methods for additive manufacturing. This disclosure provides a solution for this need.

### SUMMARY

A stock material for additive manufacturing includes an extrudable filament configured for use as feed stock for an extrusion type additive manufacturing machine. Machine code is physically affixed to the extrudable filament. The machine code includes code specifying build instructions readable by the extrusion type additive manufacturing machine for building a specific part.

The machine code can include layer by layer movement instructions for controlling an extruder of the additive manufacturing machine to make a specific part. The machine code can be encrypted. The machine code can be formed in markings that are configured to evaporate or dissolve while being extruded through the additive manufacturing machine. The markings can be formed from a thermal, mechanical, and/or chemical process.

A method includes receiving extrudable filament into an extrusion type additive manufacturing machine. The method includes reading machine code physically affixed to the extrudable filament, wherein the machine code includes code specifying build instructions readable by the extrusion type additive manufacturing machine for building a specific part. The method includes following the instructions with an extruder to additively manufacture the specific part.

Following the instructions with an extruder can include evaporating or dissolving the markings of which the machine code is formed. Following the instructions with the extruder can include building the specific part layer by layer. Reading machine code and following the instructions with the extruder can occur at the same time, e.g., wherein a portion of the extrudable filament being read contains instructions controlling the extruder in real time without copying the machine code. There can be a lag between reading a portion of the machine code and when that portion of the machine code is followed by the extruder so a final layer of the specific part is printed after instructions for the final layer are received from the filament material, e.g. where the machine code is buffered but no complete or permanent copy is made of the machine code. The machine code corresponding to early layers in the specific part can be destroyed prior to printing subsequent layers of the specific part. The method can include decrypting the machine code for use in controlling the extruder.

A method includes physically affixing machine code to an extrudable filament for use as feed stock for a material extrusion type additive manufacturing machine, wherein the machine code includes code specifying build instructions readable by the extrusion type additive manufacturing machine for building a specific part. The method can include encrypting the machine code prior to physically affixing the machine code to the extrudable filament.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an embodiment of a machine for additive manufacturing constructed in accordance with the present disclosure, showing extrudable filament with machine code affixed thereto for printing a specific part in with the additive manufacturing machine; and
Fig. 2 is a schematic view of a process for encoding the machine code of Fig. 1 onto the extrudable filament.

### DETAILED DESCRIPTION OF THE PREFERRED EMBODIMENTS

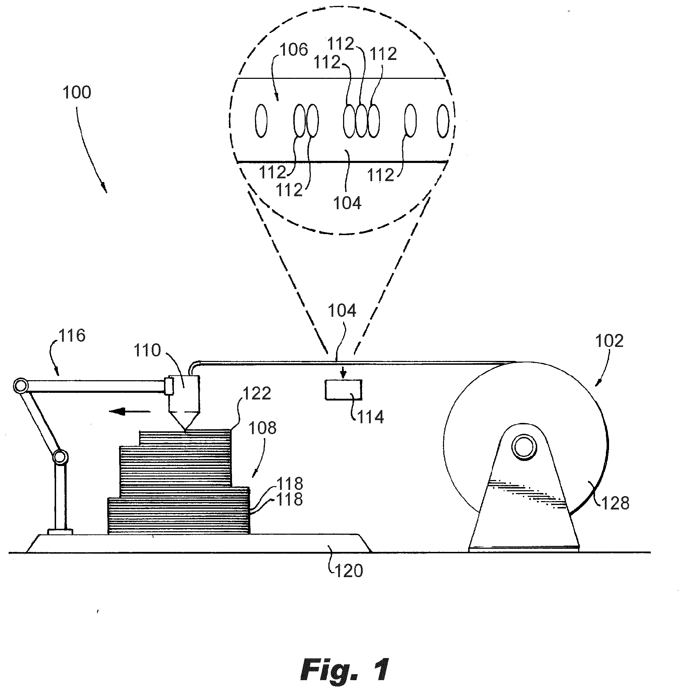

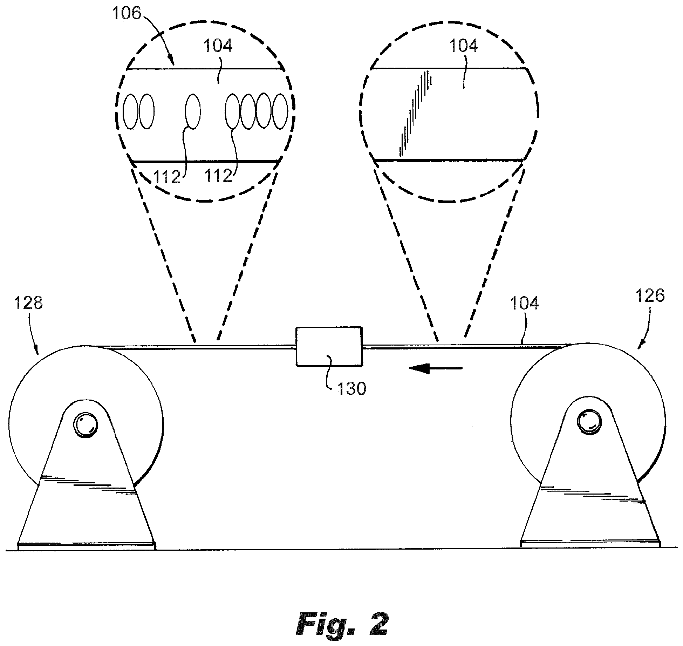

Reference will now be made to the drawings wherein like reference numerals identify similar structural features or aspects of the subject disclosure. For purposes of explanation and illustration, and not limitation, a partial view of an embodiment of an additive manufacturing machine in accordance with the disclosure is shown in Fig. 1 and is designated generally by reference character 100. Other embodiments of systems in accordance with the disclosure, or aspects thereof, are provided in Fig. 2, as will be described. The systems and methods described herein can be used to provide self-destructing code for additively manufactured parts, e.g., so the designer can maintain control of quality, unauthorized copying, and the like.

A stock material 102 for additive manufacturing includes an extrudable filament 104 configured for use as feed-stock for the extrusion type additive manufacturing machine 100. Machine code 106 (schematically indicated in the magnified inset of Fig. 1) is physically affixed to the extrudable filament 104. The machine code 106 includes code specifying build instructions readable by the material extrusion type additive manufacturing machine 100 for building a specific part 108.

The machine code 106 can include layer by layer movement instructions for controlling the extruder 110 of the additive manufacturing machine 100 to make the specific part 108. The machine code 106 can be encrypted. The machine code 106 can be formed in markings 112 (schematically indicated in the magnified inset of Fig. 1) that are configured to evaporate or dissolve while being extruded through the extruder 110 additive manufacturing machine 100. The markings 112 can be formed from a thermal, mechanical (e.g. engraving) and/or chemical process, e.g. in writer 130 described more below. The spacing between the markings 112 can be indicative of numerical values, e.g., binary, or the like, similar to the data written on compact discs.

A method includes receiving extrudable filament, e.g. filament 104, into a material extrusion type additive manufacturing machine, e.g. machine 100. The method includes reading machine code that is physically affixed to the extrudable filament, e.g., reading machine code 106 with a reader 114 of the machine 100, wherein the machine code includes code specifying build instructions readable by the material extrusion type additive manufacturing machine for building a specific part, e.g. specific part 108 of Fig. 1. The method includes following the instructions with an extruder, e.g. moving extruder 108 with gantry 116 and controlling the rate at which the filament 104 is extruded through the extruder 110, to additively manufacture the specific part.

Following the instructions with an extruder can include evaporating or dissolving the markings, e.g., markings 112, of which the machine code is formed. Following the instructions with the extruder can include building the specific part 108 layer by layer, e.g. starting from a build plate 108 and adding layers 118 layer by layer. Reading machine code and following the instructions with the extruder can occur at the same time, e.g., wherein a portion of the extrudable filament being read contains instructions controlling the extruder in real time without copying the machine code. There can be a lag between reading a portion of the machine code and when that portion of the machine code is followed by the extruder, e.g. so a final layer 122 of the specific part 108 is printed after instructions for the final layer 122 are received from the filament material 104, e.g. where the machine code is buffered in reader 114 but no complete or permanent copy is made of the machine code 106. The machine code corresponding to early layers, e.g. layers closer to the build plate 120, in the specific part can be destroyed prior to printing subsequent layers, e.g. layers farther from the build plate 120, of the specific part. The method can include decrypting the machine code for use in controlling the extruder.

With reference now to Fig. 2, a method includes physically affixing machine code 106 to an extrudable filament 104 for use as feed-stock, e.g. passing the feed-stock from a first reel 126 to a second reel 128 so reel 126 can be used as stock material in the machine 100 of Fig. 1. For example, passing the filament from reel 126 to reel 128 while passing the filament through a writer 130 which places the machine code 106 on the filament 104 as indicated by the movement arrows and the two magnified insets in Fig. 2. The method can include encrypting the machine code prior to physically affixing the machine code to the extrudable filament, e.g. wherein the writer 130 writes encrypted machine code onto the filament 104.

The methods and systems of the present disclosure, as described above and shown in the drawings, provide for self-destructing code for additively manufactured parts, e.g., so the designer can maintain control of quality, unauthorized copying, and the like. While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. A stock material for additive manufacturing comprising:
an extrudable filament (104) configured for use as feed-stock for an extrusion type additive manufacturing machine; and
machine code (106) physically affixed to the extrudable filament, wherein the machine code includes code specifying build instructions readable by the extrusion type additive manufacturing machine for building a part.

2. The stock material as recited in claim 1, wherein the machine code includes layer by layer movement instructions for controlling an extruder of the extrusion type additive manufacturing machine to make the specific part.

3. The stock material as recited in claim 2, wherein the machine code is encrypted.

4. The stock material as recited in claim 1, 2 or 3, wherein the machine code is formed in markings (112) that are configured to evaporate or dissolve while being extruded through the additive manufacturing machine.

5. The stock material as recited in claim 4, wherein the markings are formed from a thermal, mechanical, and/or chemical process.

6. A method comprising:
receiving extrudable filament (104) into an extrusion type additive manufacturing machine (100);
reading machine code (106) physically affixed to the extrudable filament, wherein the machine code includes code specifying build instructions readable by the extrusion type additive manufacturing machine for building a specific part; and
following the instructions with an extruder (110) to additively manufacture the specific part.

7. The method as recited in claim 6, wherein machine code is formed in markings (112) that are configured to evaporate or dissolve while being extruded through the additive manufacturing machine, and wherein following the instructions with an extruder includes evaporating or dissolving the markings.

8. The method as recited in claim 6, wherein the machine code includes layer by layer movement instructions for controlling the extruder of the additive manufacturing machine to make a specific part, wherein following the instructions with the extruder includes building the specific part layer by layer.

9. The method as recited in claim 8, wherein reading machine code and following the instructions with the extruder occur at the same time, wherein a portion of the extrudable filament being read contains instructions for controlling the extruder in real time without copying the machine code.

10. The method as recited in claim 9, wherein there is a lag between:
reading a portion of the machine code; and
a time when the portion of the machine code is followed by the extruder so a final layer of the specific part is printed after instructions for the final layer are received from the filament material.

11. The method as recited in claim 9, wherein the machine code corresponding to early layers in the specific part is destroyed prior to printing subsequent layers of the specific part.

12. The method as recited in claim 6, wherein the machine code is encrypted and further comprising decrypting the machine code for use in controlling the extruder.

13. A method comprising:
physically affixing machine code (106) to an extrudable filament (104) for use as feed-stock for a material extrusion type additive manufacturing machine, wherein the machine code includes code specifying build instructions readable by the extrusion type additive manufacturing machine for building a specific part.

14. The method as recited in claim 13, wherein the machine code comprises markings formed from a thermal, mechanical, and/or chemical process.

15. The method as recited in claim 13, further comprising encrypting the machine code prior to physically affixing the machine code to the extrudable filament.
